# EUROPÄISCHE PATENTSCHRIFT

(11) **EP 4 103 451 B1**
(45) Veröffentlichungstag und Bekanntmachung des Hinweises auf die Patenterteilung: **03.04.2024**
(21) Anmeldenummer: 21703251.5
(22) Anmeldetag: 03.02.2021
(51) Int. Cl.: B62D 1/181, B62D 1/183, B62D 5/00

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 11.02.2020 DE 102020201703
(43) Veröffentlichungstag der Anmeldung: 21.12.2022
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2021/052506
(87) Internationale Veröffentlichungsnummer: WO 2021/160485

(56) Entgegenhaltungen:
- WO-A1-2016/023691
- DE-A1-102014 216 140
- US-A1- 2017 369 091
- US-A1- 2019 016 365

## Beschreibung

### Stand der Technik

Die Erfindung betrifft eine Lenksäule gemäß dem Oberbegriff des Patentanspruchs 1.

Insbesondere sind derartige Lenksäulen für Steer-by-wire-Lenksysteme geeignet. Derartige Steer-by-wire-Lenksysteme für Kraftfahrzeuge nehmen manuelle Lenkbefehle des Fahrers wie konventionelle mechanische Lenkungen durch Drehung eines Lenkrads entgegen, welches an der Lenksäule fahrerseitig an der Lenkspindel befestigt ist. Ein in die Lenkspindel eingebrachter Lenkbefehl wird mittels Drehwinkel- bzw. Drehmomentsensoren erfasst, und ein daraus erzeugtes elektrisches Steuersignal wird an einen Lenksteller abgegeben, der mittels eines elektrischen Stellantriebs einen entsprechenden Lenkeinschlag der Räder einstellt.

Zur Erzeugung eines realistischen Fahrgefühls ist es bei Steer-by-Wire-Lenksystemen im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen Größen ein RückkopplungsSignal zu bilden, welches in einen motorischen Feedback-Aktuator eingespeist wird. Der Feedback-Aktuator kann in die Lenksäule integriert sein und einen als Handmoment- oder Lenkradsteller dienenden elektrischen Stellantrieb umfassen, der abhängig vom Rückkopplungs-Signal ein dem realen Reaktionsmoment entsprechendes Rückstellmoment (Feedbackmoment) über die Lenkspindel in das Lenkrad einkoppeln kann. Derartige "Force-feedback"-Systeme geben dem Fahrer den Eindruck einer realen Fahrsituation wie bei einer konventionellen, mechanisch gekoppelten Lenkung, was eine intuitive Reaktion erleichtert.

Es ist bekannt, die Lenksäule in Längsrichtung, d.h. in Achsrichtung der Lenkspindel bzw. in Richtung der Längsachse, verstellbar zu gestalten, um im manuellen Fahrbetrieb das Lenkrad in Betriebsstellung in einer Bedienposition für einen bequemen manuellen Lenkeingriff an die Fahrerposition anzupassen. Beim autonomen Fahren wird im autonomen Fahrbetrieb, in dem kein manueller Lenkeingriff erfolgt, die Lenksäule vorzugsweise so weit wie möglich längs zusammengeschoben und dadurch in eine Verstaustellung gebracht, um das Lenkrad in eine Verstauposition außerhalb der Bedienposition zu bringen, so dass der Fahrzeuginnenraum für eine anderweitige Nutzung freigegeben wird.

Zur Realisierung der Verstauung ist es im Stand der Technik beispielsweise aus der US 2017/0369091 A1 bekannt, dass die Manteleinheit eine längenveränderbare Teleskopanordnung mit mindestens einem Führungskasten, auch als Außenmantelrohr bezeichnet, aufweist, in den ein Mantelrohr, auch als Innenmantelrohr bezeichnet, in Längsrichtung, d.h. in Richtung der Längsachse eintaucht. Die Lenkspindel ist ebenfalls längenvariabel teleskopierbar ausgestaltet und weist eine in dem Mantelrohr drehbar gelagerte Innenwelle auf, die teleskopartig in Längsrichtung verstellbar in die hohle Außenwelle eintaucht, die relativ zum Führungskasten drehbar gelagert ist. Zur Drehmomentübertragung ist zwischen Innen- und Au-βenwelle eine Formschlussführung angeordnet, die drehschlüssig ineinander eingreifende, in Längsrichtung verstellbare korrespondierende Formschlusselemente aufweist.

Zum Einstellen der Verstaustellung wird das Mantelrohr zusammen mit der Innenwelle und dem daran angebrachten Lenkrad so weit wie möglich in Fahrtrichtung nach vorn in den Führungskasten eingeschoben, d.h. nach vorn hineinbewegt. Um das Lenkrad beim autonomen Fahrbetrieb in der Verstaustellung sicher im Fahrzeuginnenraum zu fixieren, ist in der US 2017/0369091 A1 eine Verriegelungseinrichtung vorgesehen. Diese weist an der Außenwelle und in dem Führungskasten korrespondierende Formschlusselemente auf, die in Verstaustellung in Längsrichtung ineinander eingreifen und die Außenwelle drehfest in dem Führungskasten festlegen. Dabei wird zugleich die drehschlüssige Verbindung zwischen Innen- und Außenwelle außer Eingriff gebracht und die drehschlüssige Verbindung getrennt, so dass der motorische Feedback-Aktuator von dem Lenkrad abgekoppelt ist.

Die Verriegelungseinrichtung weist koaxial zwischen der Außenwelle und dem Führungskasten angeordnete, drehschlüssig in Eingriff bringbare Ringelemente auf. Nachteilig daran ist, dass durch die koaxiale Anordnung relativ viel Bauraum erforderlich ist. Außerdem können in dem von der Lenkspindel abgekoppelten Feedback-Aktuator beispielsweise durch Vibrationen unerwünschte Störgeräusche angeregt werden.

Angesichts der vorangehend erläuterten Problematik ist es eine Aufgabe der vorliegenden Erfindung, einen kompakteren Aufbau einer Lenksäule zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeugs, umfassend eine in einem Mantelrohr um eine Längsachse drehbar gelagerte Lenkspindel, wobei die Lenkspindel eine in einer Außenwelle in Längsrichtung teleskopartig verstellbare, drehmomentschlüssig aufgenommene Innenwelle aufweist, und das Mantelrohr in Längsrichtung teleskopartig verstellbar in einem Führungskasten aufgenommen ist, und einen elektromotorischer Feedback-Aktuator zum drehenden Antrieb der Lenkspindel aufweist, wobei zwischen der Lenkspindel und dem Führungskasten eine Verriegelungseinrichtung angeordnet ist, die in einer zusammengeschobenen Verstaustellung in Wirkeingriff bringbar ist, um die Lenkspindel drehfest mit dem Führungskasten zu verriegeln, ist erfindungsgemäß vorgesehen, dass die Verriegelungseinrichtung ein an der Innenwelle ausgebildetes Formschlusselement aufweist, welches mit einem an dem Führungskasten ausgebildeten korrespondierenden Gegenformschlusselement drehschlüssig in Eingriff bringbar ist.

Bei der Erfindung ist die Verriegelungseinrichtung nicht wie im Stand der Technik zwischen Außenwelle und Führungskasten angebracht, sondern wirkungsmäßig zwischen der Innenwelle und dem Führungskasten. Daraus resultiert der Vorteil, dass kein zusätzlicher radialer Bauraum radial außerhalb der Außenwelle beansprucht wird, und ein kleiner bauender, kompakterer Aufbau als im Stand der Technik ermöglicht wird.

In der Verstaustellung taucht in der erfindungsgemäßen Anordnung die Innenwelle in Längsrichtung, also in Richtung der Längsachse, weiter nach vorn in den Führungskasten ein als in einer Betriebsstellung. Definitionsgemäß weist dabei das vordere, in Fahrtrichtung nach vorn gerichtete Ende der Lenkspindel auf den Führungskasten. Das hintere Ende, an dem das Lenkrad angebracht ist, steht in Fahrrichtung nach hinten relativ zum Führungskasten heraus. In diesem Sinne werden im Folgenden die Begriffe "vorn" und "hinten" für die Orientierung der Lenksäule und der darin zusammenwirkenden Einzelteile verwendet. Entsprechend befindet sich die in Verstaustellung nach vorn in den Führungskasten eintauchende Innenwelle mit ihrem vorderen Ende im vorderen Endbereich des Führungskastens.

An der Innenwelle kann ein erfindungsgemäßes Formschlusselement in einem Abschnitt der Innenwelle angeordnet sein, der in der Verstaustellung der Außenwelle von außen zugänglich ist. Dadurch ist es möglich, das Formschlusselement und das korrespondierende Gegenformschlusselement bezüglich des Außenumfangs der Außenwelle in radialer Richtung nach innen zu verlegen, so dass die Verriegelungseinrichtung unabhängig vom Außendurchmesser der Außenwelle mit einem kleineren Durchmesser bzw. Querschnitt realisierbar ist als im Stand der Technik. Dadurch kann eine vorteilhafte kompaktere Bauform realisiert werden. Bevorzugt ist die erfindungsgemäße Lenksäule für eine Steer-by-wire Lenksäule geeignet.

In einer vorteilhaften Weiterbildung kann es vorgesehen sein, dass der Führungskasten von einer Trageinheit gehalten ist. Die Trageinheit ist mit dem Kraftfahrzeug verbindbar.

Bevorzugt weist die Außenwelle ein Innenquerschnittsprofil auf, welches mit einem Außenquerschnittsprofil der Innenwelle korrespondiert, wobei das Innenquerschnittsprofil und das Außenquerschnittsprofil drehmomentenschlüssig gekoppelt sind. In einer vorteilhaften Weiterbildung bildet das Außenquerschnittsprofil die Formschlusselemente oder die Formschlusselemente korrespondieren mit dem Außenquerschnittsprofil. Dank dieser Maßnahme kann die Herstellung der Innenwelle vereinfacht werden.

Bevorzugt weist die Innenwelle einen Befestigungsabschnitt auf, der mit einem Lenkrad koppelbar ist.

Eine vorteilhafte Ausgestaltung der Erfindung ist, dass die Innenwelle in dem Mantelrohr gelagert und axial, in Längsrichtung darin gehalten ist, wobei das Mantelrohr als Innenmantel nach hinten aus dem als Außenmantel ausgebildeten Führungskasten herausstehen kann. Dabei kann die rohrförmige Außenwelle in dem Führungskasten drehbar gelagert sein, und in Längsrichtung gehalten werden. Entsprechend wird die Anordnung aus Mantelrohr und Innenwelle, die auch als Stelleinheit bezeichnet werden kann, zum Verstauen nach vorn verstellt, wobei das Mantelrohr teleskopierend in den Führungskasten eintaucht, und gleichzeitig die Innenwelle in die Außenwelle.

Eine vorteilhafte Ausführung der Erfindung kann vorsehen, dass das Formschlusselement an dem in den Führungskasten eintauchenden vorderen Ende der Innenwelle angeordnet ist. Das Formschlusselement kann einen stirnseitig angeordneten Formschlussquerschnitt haben, der eine bezüglich Drehung um die Längsachse drehschlüssige Verbindung ermöglicht, beispielsweise ein in Richtung der Längsachse axial nach vorn gerichtetes oder vorstehendes unrundes Formschlusselement, wie etwa einen mehrkantigen Prismenzapfen, eine Längsverzahnung ähnlich wie bei einer Zahnwelle, oder dergleichen. Alternativ ist es denkbar, dass das Formschlusselement eine stirnseitig eingeformte offene Formschlussvertiefung aufweist, beispielsweise ähnlich einem Innenmehrkant-Werkzeugansatz. Ein axial in Längsrichtung bevorzugt vorne stirnseitig an der Innenwelle angeordnetes Formschlusselement hat den Vorteil, dass kein radialer Bauraum für die Verriegelungseinrichtung erforderlich ist.

Bevorzugt kann das Formschlusselement koaxial zur Längsachse angeordnet sein.

Bevorzugt sind die Formschlusselemente gleichmäßig über den Umfang der Innenwelle verteilt angeordnet.

Bevorzugt weisen die Formschlusselemente und die Gegenformschlusselement eine Spielpassung zueinander auf. Dank dieser Ausführung kann das in Eingriff- und außer Eingriff - bringen verschleißarm und mit einem geringen Kraftaufwand erfolgen.

Wenn das Formschlusselement vorne an der Innenwelle angeordnet ist, ist es vorteilhaft, dass das Gegenformschlusselement in einer vorderen Stirnseite des Führungskastens angeordnet ist. Beispielsweise kann der Führungskasten vorne, in seinem karosserieseitigen Endbereich, eine Stirnwand aufweisen, welche auch einen vorderen axialen Endanschlag für das in Verstaustellung nach vorn eintauchende Mantelrohr bilden kann. Auch die Außenwelle der Lenkspindel kann nach vorn axial gegen die Stirnwand abgestützt bzw. gelagert sein. Die Stirnwand kann bevorzugt das Gegenformschlusselement aufweisen, welches durch die axiale Relativbewegung zwischen Innenwelle und Führungskasten bei Verstauen in Längsrichtung in Formschlusseingriff gebracht werden kann. Beispielsweise kann das Gegenformschlusselement eine einfache, unrunde Formschlussausnehmung oder -öffnung in einer Stirnwand aufweisen, oder auch einen axial gegen die Stirnseite der Innenwelle vorstehenden Formschlusszapfen oder dergleichen, wobei eine Anpassung an das Formschlusselement der Innenwelle derart erfolgt, dass ein axialer Formschlusseingriff zur Erzeugung einer drehschlüssigen Verbindung zwischen Innenwelle und der Stirnwand des Führungskastens ermöglicht ist. Beispielsweise kann das Gegenformschlusselement eine in Längsrichtung eingeformte oder durchgehende, mit dem Querschnitt des stirnseitigen Formschlusselements der Innenwelle korrespondierende Vertiefung oder Öffnung aufweisen. Diese Gegenformschlusselemente können mit geringem Aufwand realisiert werden und sind robust und betriebssicher.

Alternativ kann das Gegenformschlusselement einen entgegen der relativen Richtung beim Verstauen gegen die Stirnseite der Innenwelle vorstehenden, unrunden Formschlusszapfen aufweisen, der bevorzugt koaxial angeordnet sein kann und drehschlüssig in ein als stirnseitige Vertiefung ausgebildetes Formschlusselement an der Innenwelle eingreifen kann.

Durch die axial stirnseitig vorn an der Innenwelle und einer vorderen Stirnwand des Führungskastens ausgebildeten Formschluss- und Gegenformschlusselemente kann ein besonders geringer Bauraum realisiert werden.

Gemäß einer vorteilhaften Ausführung kann vorgesehen sein, dass das Formschlusselement drehmomentschlüssig, in Längsrichtung verstellbar mit einer korrespondierenden Formschlussführung der Außenwelle verbunden ist. Bei dieser Ausführung kann das Formschlusselement eine doppelte Funktion haben, nämlich zum einen zur Bildung des in Längsrichtung verstellbaren Formschlusseingriffs mit der korrespondierenden Formschlussführung der Au-βenwelle zur Erzeugung des Drehmomentschlusses mit der Innenwelle, und zum anderen zur Erzeugung des erfindungsgemäßen Formschlusses der Innenwelle mit dem Führungskasten. Ein Vorteil ist, dass ein einziges Formschlusselement, welches für die Verbindung von Innen- und Außenwelle ohnehin vorhanden ist, zusätzlich für die Verriegelungseinrichtung genutzt werden kann. Das Gegenformschlusselement kann beispielsweise einfach als Formschlussöffnung mit einem zur Formschlussführung der Außenwelle gleichwirkenden Innenquerschnitt ausgebildet sein. Dadurch kann der Fertigungsaufwand verringert werden.

Es ist möglich, dass in der Verstaustellung die Innenwelle drehmomentschlüssig mit der Au-βenwelle und dem Führungskasten verbunden ist. Außerhalb der Verstaustellung kann die Innenwelle nur mit der Außenwelle drehschlüssig gekoppelt sein, während in der Verstaustellung gleichzeitig ein drehschlüssiger Formschluss zwischen Innenwelle, Außenwelle und Führungskasten erzeugt wird. Dadurch kann der mit der Außenwelle verbundene Steer-by-Wire-Aktuator gehalten und dadurch in vorteilhafter Weise gegen unbeabsichtigte Drehung oder unerwünschte Vibrationen gesichert sein, wodurch potentielle Störgeräusche vermieden werden können.

Es ist möglich, dass die Außenwelle in Längsrichtung zum Gegenformschlusselement hin offen ist. Dies kann beispielsweise durch einen axial, in Längsrichtung durchgehenden Durchgang realisiert sein. Dadurch kann die Innenwelle in der Verstaustellung so weit nach vorn in die Außenwelle eingeführt bzw. durch diese hindurchgeführt werden, dass ein Formschlusselement am vorderen Ende der Innenwelle axial mit dem Gegenformschlusselement in Eingriff gelangen kann. Die Innenwelle kann nach vorn aus der Außenwelle vorstehen, oder zumindest durch die vordere Öffnung der Außenwelle axial von außen zugänglich sein, so dass das Formschlusselement in ein korrespondierendes Gegenformschlusselement an dem Führungskasten, wie oben beschrieben eingreifen kann, beispielsweise in eine Formschlussöffnung in einer den Führungskasten vorn abschließenden Stirnwand. Alternativ kann durch den nach vorn offenen Durchgang der Außenwelle ein von der Stirnwand axial gegen die Innenwelle vorstehendes Gegenformschlusselement, beispielsweise ein Formschlusszapfen oder dergleichen, in eine korrespondierende, stirnseitige Formschlussvertiefung oder -ausnehmung in der Innenwelle eingreifen. Beispielsweise kann auch die Formschlussführung der Außenwelle vorne offen gestaltet sein, so dass ein Formschlusseingriff zur Verriegelung der Lenkspindel in der Verstaustellung möglich ist, wenn die Gegenformschlussöffnung in der Winkelorientierung mit der Formschlussführung der Außenwelle fluchtend ausgerichtet ist. Dadurch wird eine vorteilhafte einfache und exakte Winkelausrichtung ermöglicht, und der Fertigungs- und Montageaufwand kann gering gehalten werden.

Es kann vorgesehen sein, dass der Feedback-Aktuator die Lenkspindel vor dem Ineingriffbringen der Formschlusselemente mit den Gegenformschlusselementen derart verdreht, dass die Formschlusselemente zu den Gegenformschlusselementen ausgerichtet sind, so dass der Eingriff der Formschlusselemente mit den Gegenformschlusselemente ohne Kollisionen erfolgen kann.

Eine vorteilhafte Ausführung der Erfindung kann sein, dass der Feedback-Aktuator in dem Führungskasten angeordnet ist. Der Feedback-Aktuator weist bevorzugt einen elektrischen Motor auf, der mit der Lenkspindel direkt oder über ein Getriebe gekuppelt sein kann, um die Lenkspindel zur Erzeugung eines Feedback-Drehmoments relativ zum Führungskasten drehend anzutreiben. Durch die Integration in den Führungskasten kann eine kompakte Bauweise realisiert sein.

Es ist möglich, den Rotor des Motors koaxial zur Lenkspindel anzuordnen. Bevorzugt kann dabei vorgesehen sein, dass der Feedback-Aktuator koaxial an der Außenwelle angebracht ist. Die Außenwelle kann in Längsrichtung in dem Führungskasten gehalten und abgestützt sein, und mit dem Führungskasten kann ein Stator des Motors verbunden sein, vorzugsweise innerhalb des Führungskastens. Die Außenwelle mit dem Rotor verläuft koaxial zum Stator. Die koaxiale Anordnung ermöglicht eine Bauraumoptimierung.

Es kann vorgesehen sein, dass in der Verstaustellung der Feedback-Aktuator in dem Mantelrohr angeordnet ist. In der Verstaustellung taucht das Mantelrohr in den radialen Zwischenraum zwischen der Außenwelle der Lenkspindel und dem Führungskasten ein. Zumindest ein Rotor des Feedback-Aktuators kann an dem Außenrohr angebracht sein, bevorzugt koaxial, dadurch, dass der Rotor einen Außenquerschnitt hat, der kleiner ist als der offene Innenquerschnitt des Mantelrohrs, kann das Mantelrohr beim Verstauen den Rotor axial in sich aufnehmen, wodurch eine besonders kompakte Bauform ermöglicht wird.

Es kann vorgesehen sein, dass zwischen dem Mantelrohr und dem Führungskasten mindestens ein motorischer Verstellantrieb angeordnet ist. Es ist bekannt, die Längsverstellung zum Verstellen in Längsrichtung und zum Verstauen mittels eines motorischen Längs-Verstellantriebs zu ermöglichen, der beispielsweise einen an sich bekannten motorisch antreibbaren Spindeltrieb umfassen kann, der in Längsrichtung an dem Führungskasten und dem Mantelrohr angreift. Zusätzlich kann zur Längsverstellung der Lenksäule ein Höhen-Verstellantrieb vorgesehen sein, der beispielsweise zwischen einer den Führungskasten in Höhenrichtung verschwenkbar lagernden, an der Karosserie festlegbaren Trageinheit eingesetzt ist. Dieser kann ebenfalls einen Spindeltrieb umfassen. Der oder die elektrischen Verstellantriebe ermöglichen insbesondere ein automatisiertes Verstauen der Lenksäule im autonomen Fahrbetrieb, und entsprechend ein Aktivieren, bei dem ein Ausfahren aus der Verstaustellung heraus in die Betriebsstellung erfolgt, in der ein manueller Lenkeingriff erfolgen kann.

Dank der Erfindung kann das Lenkrad in der Verstauposition durch die selbsttätig eingreifende Verriegelungseinrichtung gesichert werden, und umgekehrt erfolgt eine selbsttätige Entsicherung zur Freigabe des Lenkeingriffs und Übertragung von Feedback-Momenten, wenn die Lenksäule in Betriebsstellung gebracht wird.

Eine weitere Mögliche Ausführung kann vorsehen, dass zwischen dem Mantelrohr und dem Führungskasten mindestens ein teleskopierbares Zwischenmantelrohr angeordnet ist. Dadurch kann eine Mehrfach-Teleskopanordnung realisiert werden, um einen größeren Verstellweg zu ermöglichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 in Betriebsstellung,
- Figur 3: die Lenksäule gemäß Figur 2 in Verstaustellung,
- Figur 4: einen Längsschnitt durch die Lenksäule gemäß Figur 2 in Betriebsstellung,
- Figur 5: einen Längsschnitt durch die Lenksäule gemäß Figur 3 in Verstaustellung,
- Figur 6: eine vergrößerte Detailansciht aus Figur 5 der erfindungsgemäßen Verriegelungseinrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

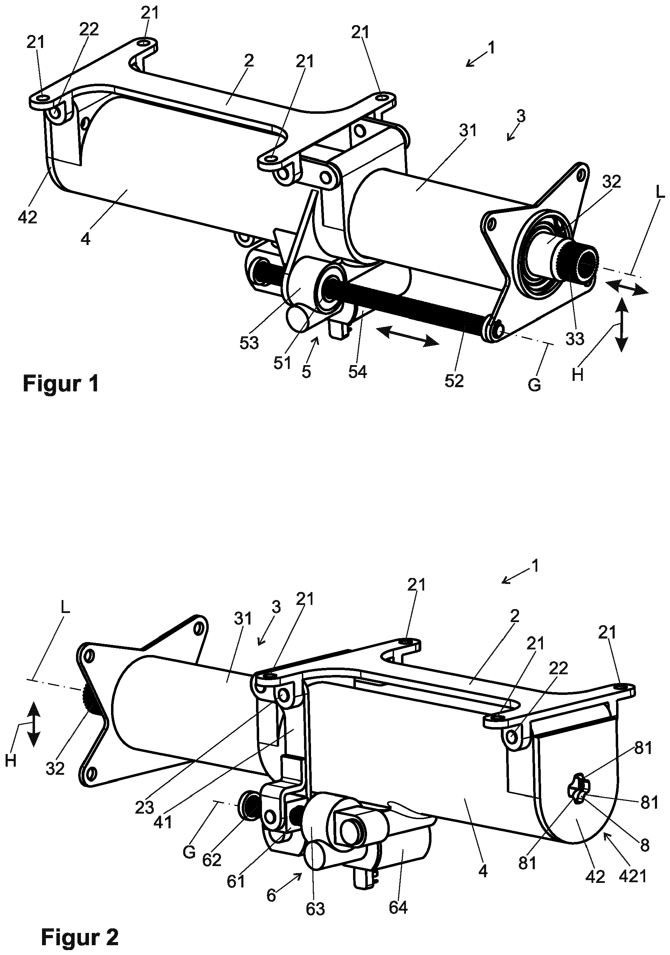

Figur 1 zeigt eine erfindungsgemäße Lenksäule 1 in einer schematischen perspektivischen Ansicht von oben links schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite auf das vordere Ende, also von oben rechts gesehen.

Die Lenksäule 1 umfasst eine Trageinheit 2, die Befestigungsmittel 21 in Form von Befestigungsbohrungen aufweist, zur Anbringung an einer nicht dargestellten Fahrzeug-Karosserie.

Eine Stelleinheit 3 weist ein Mantelrohr 31 auf, in dem eine Lenkspindel 32 um eine Längsachse L drehbar gelagert ist. Am hinteren, fahrerseitigen Ende ist an der Lenkspindel 32 ein Befestigungsabschnitt 33 ausgebildet, an dem ein nicht dargestelltes Lenkrad anbringbar ist.

Die Stelleinheit 3 ist in einem Führungskasten 4 in Längsrichtung, d.h. in Richtung der Längsachse L teleskopartig verstellbar aufgenommen, wie mit dem Doppelpfeil angedeutet.

Zur motorischen Längsverstellung ist ein Verstellantrieb 5 vorgesehen. Dieser weist einen Spindeltrieb mit einer Spindelmutter 51 auf, in die eine Gewindespindel 52 eingreift. Die Spindelachse G der Gewindespindel 52 verläuft im Wesentlichen parallel zur Längsachse L.

Die Spindelmutter 51 ist um die Spindelachse G drehbar in einem mit dem Führungskasten 4 verbundenen Lagergehäuse 53 gelagert, und dabei axial, d.h. in Richtung der Spindelachse G an dem Führungskasten 4 abgestützt. Die Gewindespindel 52 ist mit ihrem freien Ende mit dem Mantelrohr 31 verbunden, und zwar fest in Richtung der Spindelachse G bzw. der Längsachse L und feststehend bezüglich Drehung um die Spindelachse G. Die Spindelmutter 51 ist von einem Stellmotor 54 drehend antreibbar, und bildet zusammen mit der bezüglich Drehung feststehenden Gewindespindel 52 einen sogenannten Tauchspindelantrieb. Je nach relativer Drehrichtung des Stellmotors 54 kann die Gewindespindel 52 in Längsrichtung translatorisch relativ zur Spindelmutter 51 verlagert werden, so dass entsprechend die mit der Gewindespindel 52 verbundene Stelleinheit 3 relativ zu der mit dem Spindelmutter 51 verbundenen Führungskasten 4 in Längsrichtung verstellbar ist, wie mit dem Doppelpfeil angedeutet.

Zur Höhenverstellung ist der Führungskasten 4 um eine horizontale Schwenkachse 22 in seinem vorderen Bereich verschwenkbar an der Trageinheit 2 gelagert. Wie in Figur 2 erkennbar ist ein zweiter Verstellantrieb 6 als Höhenverstellantrieb vorgesehen. Dieser ist ebenfalls als Spindeltrieb ausgebildet und weist eine in eine Spindelmutter 61 eingreifende Gewindespindel 62 auf, die in einem an dem Führungskasten 4 abgestützten Lagergehäuse 63 drehbar gelagert und von einem Stellmotor 64 wahlweise in beide Rotationsrichtungen drehend antreibbar ist. Die dabei in Richtung der Spindelachse G linear relativ zur Gewindespindel verlagerte Spindelmutter 61 ist bezüglich einer Drehung um die Spindelachse G feststehend in einer Halterung an einem Ende des zweiarmigen Stellhebels 41 angebracht, der um ein Schwenklager 23 drehbar an der Trageinheit 2 gelagert ist, und dessen anderer Arm an dem Führungskasten 4 angelenkt ist. Eine translatorische Verlagerung der Spindelmutter 61 durch einen drehenden Antrieb der Gewindespindel 62 bewirkt eine Verschwenkung des Stellhebels 41, und damit eine Höhenverstellung des Führungskastens 4.

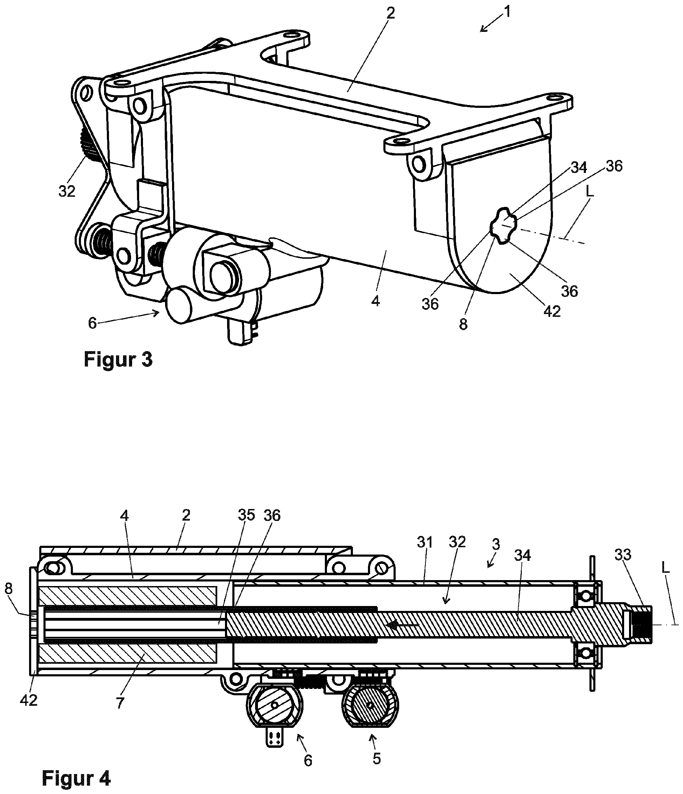

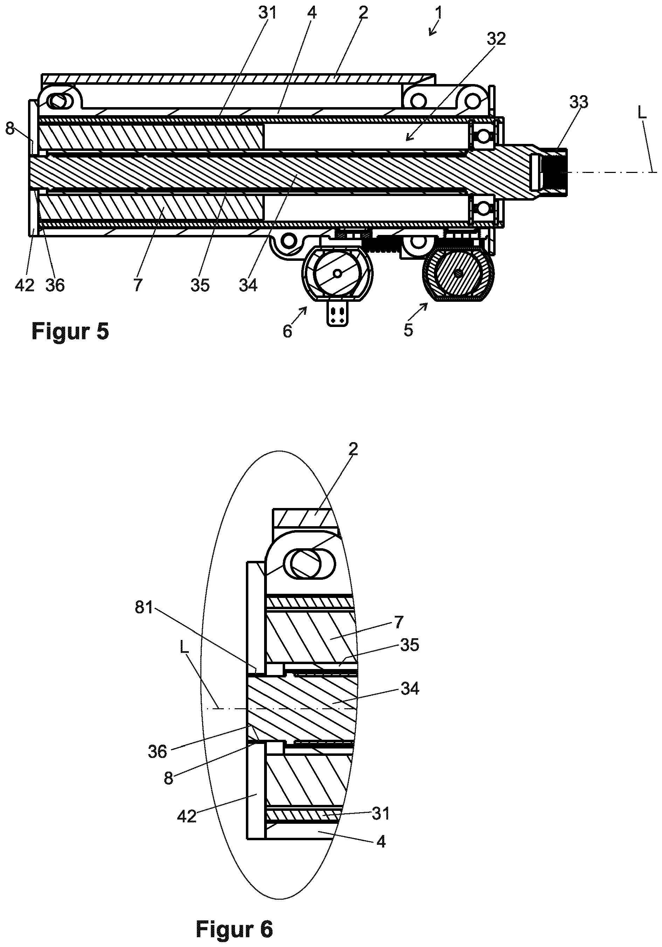

Aus den an Figuren 4 und 5 gezeigten Längsschnitten entlang der Längsachse L ist ersichtlich, dass die Lenkspindel 32 eine Innenwelle 34 aufweist, die in dem Mantelrohr 31 drehbar gelagert ist, und die in Längsrichtung teleskopierbar in eine rohrförmige Außenwelle 35 eingreift. Die Innenwelle 34 hat ein Formschlusselement 36 mit einem unrunden, beispielsweise sternförmigen oder mehrkantigen Außenquerschnitt, der drehschlüssig in einen korrespondierend geformten Innenquerschnitt des in Längsrichtung durchgehenden axialen Durchgangs der Außenwelle 35 in Längsrichtung verschiebbar eintaucht. Die Außenwelle 35 ist in Längsrichtung fix, in dem Führungskasten 4 drehbar gelagert.

Koaxial zur Außenwelle 35 ist ein Feedback-Aktuator 7 angeordnet, der einen im Einzelnen nicht detailliert dargestellten Elektromotor mit einem fest mit dem Führungskasten 4 verbundenen Stator und einen mit der Außenwelle 35 verbundenen Rotor aufweist.

Am vorderen Ende weist der Führungskasten eine Stirnwand 42 auf. In der Stirnwand 42 ist koaxial zur Längsachse L eine Formschlussöffnung 8 angeordnet. Diese hat einen unrunden Innenquerschnitt, welcher wie dargestellt kreuzförmig mit gerundeten Flanken ausgebildet sein kann, oder auch als Mehrkant, und ähnlich oder gleich dem Innenquerschnitt der Au-βenwelle 35 ausgebildet sein kann. Dabei bildet die Formschlussöffnung 8 ein Gegenformschlusselement 81 zu dem Formschlusselement 36 im Sinne der Erfindung, in welches die Innenwelle 34 mit ihrem unrunden Außenquerschnitt axial hineinbewegt werden kann und darin drehschlüssig fixiert ist.

Figuren 2 und 4 zeigen die Lenksäule 1 in einer Betriebsstellung, in der die Stelleinheit 3, mit dem Mantelrohr 31 teleskopartig aus dem Führungskasten 4 heraus verstellt, d.h. ausgefahren ist. In die Lenkspindel 32 kann mittels eines am Befestigungsabschnitt 33 der Innenwelle 34 angebrachten, nicht dargestellten Lenkrads ein manueller Lenkbefehl eingebracht werden, und von dem Feedback-Aktuator 7 kann über die Außenwelle 35 ein Feedback-Moment in die Lenkspindel 32 eingebracht werden.

Zum Verstauen kann die Stelleinheit 3 aus der Betriebsstellung heraus teleskopierend mittels des Verstellantriebs 5 motorisch in den Führungskasten 4 hineinbewegt werden, also wie in Figur 4 mit dem Pfeil angedeutet nach links, eingefahren werden, bis die in den Figuren 3 und 5 dargestellte Verstaustellung erreicht ist, welches der maximal zusammengeschobenen Stellung entspricht.

In der vergrößerten Darstellung von Figur 6 ist erkennbar, wie das Mantelrohr 31 in der Verstaustellung so weit in den Führungskasten 4 eintaucht, bis es axial gegen die Stirnwand 42 anschlägt. Der Feedback-Aktuator 7 wird dabei innerhalb des Mantelrohrs 31 aufgenommen, da der Außendurchmesser des Feedback-Aktuators kleiner ist als der Innendurchmesser des Mantelrohrs 31. Die Innenwelle 34 ragt dabei mit dem Formschlusselement 36 nach vorn, in Figur 5 nach links, aus der Durchgangsöffnung der Außenwelle 35 vor, und taucht in die das Gegenformschlusselement bildende Formschlussöffnung 8 in der Stirnwand 42 drehmomentschlüssig ein. Dadurch ist die Innenwelle 34 bezüglich Rotation um die Längsachse L drehfest an dem Führungskasten 4 festgelegt, wobei dies nicht bedeuten muss, dass dieser Drehmomentenschluss spielfrei ist. Es ist sowohl möglich, dass dieser spielbehaftet oder spielfrei ist. Dadurch sind die Außenwelle 35 und der Feedback-Aktuator 7 ebenfalls drehfest bezüglich des Führungskastens 4 fixiert und gegen ungewollte Bewegung gesichert.

### Bezugszeichenliste

- 1: Lenksäule
- 2: Trageinheit
- 21: Befestigungsmittel
- 3: Stelleinheit
- 31: Mantelrohr
- 32: Lenkspindel
- 33: Befestigungsabschnitt
- 34: Innenwelle
- 35: Außenwelle
- 36: Formschlusselement
- 4: Führungskasten
- 41: Stellhebel
- 42: Stirnwand
- 5, 6: Verstellantrieb
- 51, 61: Spindelmutter
- 52, 62: Gewindespindel
- 53, 63: Lagergehäuse
- 54, 64: Stellmotor
- 7: Feedback-Aktuator
- 8: Formschlussöffnung

- L: Längsachse

## Patentansprüche

1. Lenksäule (1) für ein Kraftfahrzeug, umfassend eine in einem Mantelrohr (31) um eine Längsachse (L) drehbar gelagerte Lenkspindel (32), wobei die Lenkspindel (32) eine in einer Außenwelle (35) in Längsrichtung teleskopartig verstellbare, drehmomentschlüssig aufgenommene Innenwelle (34) aufweist, und das Mantelrohr (31) in Längsrichtung teleskopartig verstellbar in einem Führungskasten (4) aufgenommen ist, und einen elektromotorischer Feedback-Aktuator (7) zum drehenden Antrieb der Lenkspindel (32) aufweist, wobei zwischen der Lenkspindel (32) und dem Führungskasten (4) eine Verriegelungseinrichtung angeordnet ist, die in einer zusammengeschobenen Verstaustellung in Wirkeingriff bringbar ist, um die Lenkspindel (32) drehfest mit dem Führungskasten (4) zu verriegeln,
**dadurch gekennzeichnet,**
**dass** die Verriegelungseinrichtung ein an der Innenwelle (34) ausgebildetes Formschlusselement (36) aufweist, welches mit einem an dem Führungskasten (4) ausgebildeten korrespondierenden Gegenformschlusselement (81) drehschlüssig in Eingriff bringbar ist.

2. Lenksäule nach Anspruch 1, **dadurch gekennzeichnet, dass** das Formschlusselement (36) an dem in den Führungskasten (4) eintauchenden vorderen Ende der Innenwelle (34) angeordnet ist.

3. Lenksäule nach einem der vorangehenden Ansprüche, **dadurch gekennzeichnet, dass** das Gegenformschlusselement (81) in einer vorderen Stirnseite (421) des Führungskastens (4) angeordnet ist.

4. Lenksäule nach einem der vorangehenden Ansprüche, **dadurch gekennzeichnet, dass** das Formschlusselement (36) drehmomentschlüssig, in Längsrichtung verstellbar mit einer korrespondierenden Formschlussführung der Außenwelle (35) verbunden ist.

5. Lenksäule nach einem der vorangehenden Ansprüche, **dadurch gekennzeichnet, dass** die Außenwelle (35) in Längsrichtung zum Gegenformschlusselement (81) offen ist.

6. Lenksäule nach einem der vorangehenden Ansprüche, **dadurch gekennzeichnet, dass** in der Verstaustellung die Innenwelle (34) drehmomentschlüssig mit der Außenwelle (35) und dem Führungskasten (4) verbunden ist.

7. Lenksäule nach einem der vorangehenden Ansprüche, **dadurch gekennzeichnet, dass** der Feedback-Aktuator (7) in dem Führungskasten (4) angeordnet ist.

8. Lenksäule nach einem der vorangehenden Ansprüche, **dadurch gekennzeichnet, dass** der Feedback-Aktuator (7) koaxial an der Außenwelle (35) angebracht ist.

9. Lenksäule nach einem der vorangehenden Ansprüche, **dadurch gekennzeichnet, dass** in der Verstaustellung der Feedback-Aktuator (7) in dem Mantelrohr (31) angeordnet ist.

10. Lenksäule nach einem der vorangehenden Ansprüche, **dadurch gekennzeichnet, dass** zwischen dem Mantelrohr (31) und dem Führungskasten (4) mindestens ein motorischer Verstellantrieb (5) angeordnet ist.

11. Lenksäule nach einem der vorangehenden Ansprüche, **dadurch gekennzeichnet, dass** zwischen dem Mantelrohr (31) und dem Führungskasten (4) mindestens ein teleskopierbares Zwischenmantelrohr angeordnet ist.

## Claims

1. Steering column (1) for a motor vehicle, comprising a steering spindle (32) mounted rotatably about a longitudinal axis (L) in a casing tube (31), the steering spindle (32) having an inner shaft (34) which can be adjusted telescopically in the longitudinal direction in an outer shaft (35) and is received in a torque-locking manner, and the casing tube (31) being received telescopically adjustably in the longitudinal direction in a guide box (4), and has an electromotive feedback actuator (7) for rotationally driving the steering spindle (32), a locking device being arranged between the steering spindle (32) and the guide box (4), which locking device can be brought into operative engagement in a pushed-together stowed position in order to lock the steering spindle (32) non-rotatably to the guide box (4),
**characterised in**
**in that** the locking device has a positive-locking element (36) which is formed on the inner shaft (34) and can be brought into rotational engagement with a corresponding mating positive-locking element (81) formed on the guide box (4).

2. Steering column according to claim 1, **characterised in that** the positive locking element (36) is arranged at the front end of the inner shaft (34) which dips into the guide box (4).

3. Steering column according to one of the preceding claims, **characterised in that** the mating positive-locking element (81) is arranged in a front end face (421) of the guide box (4).

4. Steering column according to one of the preceding claims, **characterised in that** the positive-locking element (36) is connected to a corresponding positive-locking guide of the outer shaft (35) in a torque-locking manner and is adjustable in the longitudinal direction.

5. Steering column according to one of the preceding claims, **characterised in that** the outer shaft (35) is open in the longitudinal direction towards the mating positive-locking element (81).

6. Steering column according to one of the preceding claims, **characterised in that** in the stowed position the inner shaft (34) is connected in a torque-locking manner to the outer shaft (35) and the guide box (4).

7. Steering column according to one of the preceding claims, **characterised in that** the feedback actuator (7) is arranged in the guide box (4).

8. Steering column according to one of the preceding claims, **characterised in that** the feedback actuator (7) is mounted coaxially on the outer shaft (35).

9. Steering column according to one of the preceding claims, **characterised in that**, in the stowed position, the feedback actuator (7) is arranged in the casing tube (31).

10. Steering column according to one of the preceding claims, **characterised in that** at least one motorised adjustment drive (5) is arranged between the casing tube (31) and the guide box (4).

11. Steering column according to one of the preceding claims, **characterised in that** at least one telescopic intermediate casing tube is arranged between the casing tube (31) and the guide box (4).

## Revendications

1. Colonne de direction (1) pour un véhicule automobile, comprenant un arbre de direction (32) logé dans un tube d'enveloppe (31) de manière à pouvoir tourner autour d'un axe longitudinal (L), l'arbre de direction (32) présentant un arbre intérieur (34) logé dans un arbre extérieur (35) de manière à pouvoir être réglé de manière télescopique dans le sens longitudinal, et le tube d'enveloppe (31) étant logé dans un boîtier de guidage (4) de manière à pouvoir être réglé de manière télescopique dans le sens longitudinal, et un actionneur à rétroaction électromoteur (7) pour l'entraînement en rotation de l'arbre de direction (32), un dispositif de verrouillage étant disposé entre l'arbre de direction (32) et le boîtier de guidage (4), lequel peut être amené en prise active dans une position de rangement repliée, afin de verrouiller l'arbre de direction (32) de manière solidaire en rotation avec le boîtier de guidage (4),
**caractérisé en ce que**
**en ce que** le dispositif de verrouillage présente un élément à engagement positif (36) formé sur l'arbre intérieur (34), qui peut être amené en engagement positif avec un élément à engagement positif complémentaire (81) correspondant formé sur le boîtier de guidage (4).

2. Colonne de direction selon la revendication 1, **caractérisée en ce que** l'élément à engagement positif (36) est disposé à l'extrémité avant de l'arbre intérieur (34) qui plonge dans le boîtier de guidage (4).

3. Colonne de direction selon l'une des revendications précédentes, **caractérisée en ce que** l'élément de fermeture de contre-forme (81) est disposé dans une face frontale avant (421) du caisson de guidage (4).

4. Colonne de direction selon l'une des revendications précédentes, **caractérisée en ce que** l'élément de liaison par complémentarité de forme (36) est relié par complémentarité de couple, de manière réglable dans le sens longitudinal, à un guide de liaison par complémentarité de forme correspondant de l'arbre extérieur (35).

5. Colonne de direction selon l'une des revendications précédentes, **caractérisée en ce que** l'arbre extérieur (35) est ouvert longitudinalement vers l'élément de fermeture de forme complémentaire (81).

6. Colonne de direction selon l'une des revendications précédentes, **caractérisée en ce que**, dans la position de rangement, l'arbre intérieur (34) est relié à l'arbre extérieur (35) et au boîtier de guidage (4) par une liaison de couple.

7. Colonne de direction selon l'une des revendications précédentes, **caractérisée en ce que** l'actionneur à rétroaction (7) est disposé dans le boîtier de guidage (4).

8. Colonne de direction selon l'une des revendications précédentes, **caractérisée en ce que** l'actionneur à rétroaction (7) est monté coaxialement sur l'arbre extérieur (35).

9. Colonne de direction selon l'une des revendications précédentes, **caractérisée en ce que**, dans la position de rangement, l'actionneur à rétroaction (7) est disposé dans le tube d'enveloppe (31).

10. Colonne de direction selon l'une des revendications précédentes, **caractérisée en ce qu'**au moins un entraînement de réglage motorisé (5) est disposé entre le tube d'enveloppe (31) et le boîtier de guidage (4).

11. Colonne de direction selon l'une des revendications précédentes, **caractérisée en ce qu'**au moins un tube d'enveloppe intermédiaire télescopique est disposé entre le tube d'enveloppe (31) et le boîtier de guidage (4).
